(19) Europäisches Patentamt
European Patent Office
Office européen des brevets

(11) **EP 4 733 126 A1**

(12) **DEMANDE DE BREVET EUROPEEN**

(43) Date de publication:
**29.04.2026 Bulletin 2026/18**

(21) Numéro de dépôt: **25209837.1**

(22) Date de dépôt: **20.10.2025**

(51) Classification Internationale des Brevets (IPC):
*B60L 53/10* (2019.01)   *B60L 53/62* (2019.01)
*H02J 3/18* (2026.01)   *H02J 3/26* (2026.01)
*H02J 7/02* (2016.01)   *B60L 53/14* (2019.01)

(52) Classification Coopérative des Brevets (CPC):
**B60L 53/62; B60L 53/10; B60L 53/14; H02J 3/18;**
**H02J 3/26; H02J 7/02;** H02J 2105/37

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH LA MA MD TN**

(30) Priorité: **21.10.2024 FR 2411421**

(71) Demandeur: **SCHNEIDER ELECTRIC**
**INDUSTRIES SAS**
**92500 Rueil-Malmaison (FR)**

(72) Inventeur: **DE CESARIS, Stefano**
**92500 RUEIL MALMAISON (FR)**

(74) Mandataire: **Lavoix**
**62, rue de Bonnel**
**69448 Lyon Cedex 03 (FR)**

(54) **PROCÉDÉ ET SYSTÈME DE RECHARGE ÉLECTRIQUE POUR VÉHICULES ÉLECTRIQUES**

(57)   Le procédé de recharge électrique est mis en œuvre par un système comportant un module de supervision, une pluralité de bornes de recharge et un dispositif de compensation adapté pour injecter un courant de compensation dans le réseau de distribution, chaque borne de recharge étant configurée pour communiquer avec le module de supervision via une liaison de communication, le procédé comportant une obtention, à partir de chaque borne de recharge, d'une représentation spectrale du courant consommé par la borne, une détermination (72) d'une représentation spectrale globale du système de recharge à partir des représentations spectrales du courant consommé par borne de recharge et par rang spectral, un calcul (75) d'au moins un paramètre d'au moins un courant de compensation, en fonction de la représentation spectrale globale et d'au moins un seuil de dégradation de facteur de puissance prédéterminé. Le courant de compensation est injecté dans le réseau de distribution d'électricité.

FIG.4

EP 4 733 126 A1

**Description**

La présente invention concerne un procédé de recharge électrique pour véhicules électriques et un système de recharge pour véhicules électriques associé, le système comportant une pluralité de bornes de recharge.

L'invention concerne également une borne de recharge et un module de supervision d'un système de recharge électrique pour véhicules électriques.

L'invention se situe dans le domaine de la recharge électrique des véhicules électriques.

De manière connue, les véhicules électriques sont équipés de batteries rechargeables, qui permettent d'alimenter en énergie électrique leur moteur de traction. Les batteries des véhicules électriques doivent être rechargées à partir d'une source d'énergie électrique, fournissant une énergie électrique alternative ou continue. Par exemple, lorsque la source d'énergie électrique est un réseau de distribution d'électricité, l'énergie électrique fournie est alternative, et fournit un courant électrique alternatif et une tension électrique alternative, sur un nombre donné de phases, par exemple triphasé. Chaque véhicule électrique est équipé d'un convertisseur, dit convertisseur embarqué, d'énergie électrique alternative en énergie électrique continue, ou convertisseur AC-DC (pour « Alternative Current » et « Direct Current » en anglais), pour permettre la recharge de la batterie rechargeable.

Il existe des systèmes de recharge électrique pour véhicules électriques comportant une ou plusieurs borne(s) de recharge à courant alternatif, ou bornes AC, ainsi qu'une ou plusieurs bornes de recharge à courant continu, ou bornes DC, chaque borne étant capable de fournir un courant électrique à un véhicule électrique qui se connecte, au moyen d'un câble adéquat, sur une telle borne de recharge. Lorsque le véhicule électrique est alimenté par une borne AC, le convertisseur embarqué dans le véhicule électrique est mis en œuvre pour effectuer la conversion du courant électrique alternatif en courant électrique continu, et recharger la batterie du véhicule électrique.

Un des problèmes susceptibles de survenir dans un tel système de recharge de véhicules électriques est le phénomène de dégradation du facteur de puissance, englobant la consommation d'énergie réactive et la production de courants harmoniques, produisant un phénomène connu sous le nom de pollution harmonique. En effet, les convertisseurs embarqués dans des véhicules électriques peuvent être de qualité médiocre, et consommer alors une puissance réactive et déformante non négligeables. Le facteur de puissance peut ainsi être dégradé, par rapport à un seuil de dégradation prédéterminé considéré comme acceptable, et cela peut générer divers problèmes tels que la ré-injection d'harmoniques de courant électrique dans le réseau de distribution, un échauffement des câbles, des disjonctions intempestives des protections électriques, des pénalités de facturation etc.

Pour limiter la survenue d'une telle pollution harmonique ou plus généralement d'un facteur de puissance médiocre, i.e un facteur de puissance inférieur à une valeur prédéterminée, une solution connue consiste à ajouter un filtre passif LC et/ou une batterie de compensation de courant réactif en amont de chaque borne de recharge. Cette solution est coûteuse et présente un encombrement non négligeable. De plus, l'utilisation de tels filtres risque de générer des pertes, et leur mise en œuvre peut provoquer des effets de bord.

Une autre solution consiste à mettre en œuvre un filtre actif qui génère un courant réactif et/ou des courants harmoniques en opposition de phase avec les courants harmoniques consommés par chaque charge polluante. Cette solution nécessite l'ajout de capteurs, et induit des modifications dans un système de recharge existant, par exemple en cas d'ajout de bornes de recharge. Ainsi, cette solution est également coûteuse et encombrante.

Le but de l'invention est alors de proposer un système et un procédé de recharge électrique qui remédie aux inconvénients de l'état de la technique, tout en permettant d'améliorer le facteur de puissance, par exemple en réduisant la pollution harmonique du système de recharge.

A cet effet, l'invention a pour objet un procédé de recharge électrique pour véhicules électriques, mis en œuvre par un système de recharge de véhicules électriques comportant un module de supervision et une pluralité de bornes de recharge comprenant au moins une borne de recharge à énergie électrique alternative, chaque borne de recharge étant alimentée par un réseau de distribution d'un courant électrique alternatif, chaque borne de recharge étant configurée pour communiquer avec le module de supervision via une liaison de communication, le système de recharge comportant au moins un dispositif de compensation adapté pour injecter un courant de compensation dans le réseau de distribution. Ce procédé comporte :

A) une acquisition, par un capteur de courant de chaque borne de recharge à courant alternatif, de mesures d'un courant consommé par un véhicule électrique connecté à ladite borne de recharge, à des instants temporels successifs, et formation d'un signal numérisé de courant consommé sur ladite borne de recharge, puis émission d'au moins un message comprenant des données relatives audit signal numérisé de courant consommé vers le module de supervision,

le procédé comportant en outre les étapes suivantes, mises en œuvre par le module de supervision:

-   B) réception des messages envoyés par chaque borne de recharge, et obtention, à partir de chaque borne de recharge, une représentation spectrale du courant consommé, calculée par application d'une transformation spectrale sur le signal numérisé de courant consommé sur ladite borne de recharge, ladite représentation spectrale comportant une pluralité de couples de valeurs d'amplitude et de phase, chaque couple étant associé à un rang spectral,

- C) détermination d'une représentation spectrale globale du système de recharge à partir des représentations spectrales du courant consommé par borne de recharge et par rang spectral,
- D) calcul d'au moins un paramètre d'au moins un courant de compensation, en fonction de la représentation spectrale globale du système de recharge et d'au moins un seuil de dégradation de facteur de puissance prédéterminé, et

par ledit au moins un dispositif de compensation

- E) génération d'au moins un courant de compensation utilisant ledit au moins un paramètre calculé et injection, dans le réseau de distribution d'électricité, dudit au moins un courant de compensation généré.

Avantageusement, le procédé proposé met en œuvre les capteurs de courant déjà présents dans les bornes de recharge, donc ne nécessite pas de modification structurelle des bornes de recharge ou de l'installation, et permet une réinjection dans le réseau de distribution d'un courant de compensation par le ou chaque dispositif de compensation, permettant alors de compenser le courant réactif et/ou les courants harmoniques pollueurs.

Suivant d'autres aspects avantageux de l'invention, le procédé de recharge électrique pour véhicules électriques comporte une ou plusieurs des caractéristiques suivantes, prises isolément ou suivant toutes les combinaisons techniquement possibles.

Le procédé est mis en œuvre dans un système de recharge de véhicules électriques comportant au moins une borne de recharge à courant continu, et l'au moins une borne de recharge à courant continu est un dispositif de compensation.

Lorsque la ou chaque borne de recharge à courant continu est alimentée par un courant d'entrée alternatif fourni par ledit réseau de distribution et comporte un convertisseur d'énergie électrique alternative en énergie électrique continue, le procédé comporte, pour chaque borne de recharge à courant continu, une acquisition par un capteur de courant de la borne de recharge à courant continu, en entrée dudit convertisseur, de mesures dudit courant consommé par ladite borne de recharge à courant continu à des instants temporels successifs, et un calcul d'une représentation spectrale du courant consommé par ladite borne de recharge à courant continu.

La détermination d'une représentation spectrale globale du système de recharge est effectuée en outre à partir de l'au moins une représentation spectrale du courant consommé par l'au moins une borne de recharge à courant continu.

L'étape de calcul d'au moins un paramètre d'au moins un courant de compensation comporte un calcul d'une valeur de dégradation représentative d'une dégradation du facteur de puissance du système de recharge, selon une métrique de calcul de dégradation du facteur de puissance, en fonction de ladite représentation spectrale globale du système de recharge.

L'étape de calcul d'au moins un paramètre d'au moins un courant de compensation comporte en outre :

- une comparaison de ladite valeur de dégradation à un seuil de dégradation, et en cas de dépassement du seuil de dégradation, une vérification de disponibilité dudit au moins un dispositif de compensation, et
- en cas de disponibilité dudit au moins un dispositif de compensation, calcul d'au moins un paramètre d'au moins un courant de compensation en fonction du seuil de dégradation.

La valeur de dégradation est représentative de la puissance réactive du système de recharge, le procédé comportant un calcul d'une pluralité de paramètres d'au moins un courant de compensation, lesdits paramètres d'au moins un courant de compensation étant des valeurs d'amplitude et de phase de rang spectral égal à un.

La valeur de dégradation est représentative d'une distorsion harmonique totale ou d'une distorsion harmonique partielle selon un ou plusieurs rangs spectraux prédéterminés, et lesdits paramètres d'au moins un courant de compensation sont, pour chaque courant de compensation, des paramètres d'amplitude et de phase d'une représentation spectrale correspondante.

Le procédé comporte une vérification de disponibilité dudit au moins un dispositif de compensation et en cas d'indisponibilité dudit au moins un dispositif de compensation, un calcul d'au moins un coefficient de déclassement à appliquer par au moins une borne de recharge à courant alternatif pour diminuer un paramètre d'énergie électrique fournie par ladite borne de recharge à courant alternatif.

Lorsque ledit au moins un dispositif de compensation est une borne de recharge à courant continu, le procédé comporte, en cas d'indisponibilité dudit au moins un dispositif de compensation, un calcul d'une consigne de diminution de puissance délivrée par ladite au moins une borne de recharge à courant continu.

Selon un autre aspect, l'invention concerne également un système de recharge électrique pour véhicules électriques comportant un module de supervision et une pluralité de bornes de recharge comprenant au moins une borne de recharge à énergie électrique alternative, chaque borne de recharge étant alimentée par un réseau de distribution d'un courant électrique alternatif, chaque borne de recharge étant configurée pour recharger un véhicule électrique connecté sur ladite borne de recharge et pour communiquer avec le module de supervision via une liaison de communication, le système de recharge comportant au moins un dispositif de compensation adapté pour injecter un courant de compensation dans le réseau de distribution, chaque borne de recharge comportant un capteur de courant configuré pour mesurer, à des instants temporels successifs, un courant consommé par un véhicule électrique connecté à ladite borne de recharge, et former un signal numérisé de courant consommé sur ladite borne de recharge, puis émettre au moins un message comprenant des données relatives audit signal numérisé de courant consommé vers le module de supervision. Ce système de recharge est tel que le module de supervision est configuré pour exécuter des modules de :

- réception des messages envoyés par chaque borne de recharge, et obtention, à partir de chaque borne de recharge, d'une représentation spectrale du courant consommé, calculée par application d'une transformation spectrale sur le signal numérisé de courant consommé sur ladite borne de recharge, ladite représentation spectrale comportant une pluralité de couples de valeurs d'amplitude et de phase, chaque couple étant associé à un rang spectral,
- détermination d'une représentation spectrale globale du système de recharge à partir des représentations spectrales du courant consommé par borne de recharge et par rang spectral,
- calcul d'au moins un paramètre d'au moins un courant de compensation, en fonction de la représentation spectrale globale du système de recharge et d'au moins un seuil de dégradation de facteur de puissance prédéterminé,

ledit au moins un dispositif de compensation étant configuré pour générer au moins un courant de compensation utilisant ledit au moins un paramètre calculé et injecter, dans le réseau de distribution d'électricité, ledit au moins un courant de compensation généré.

Selon un aspect, le système de recharge comporte au moins une borne de recharge à courant continu, et l'au moins une borne de recharge à courant continu est un dispositif de compensation.

Selon un autre aspect, l'invention concerne un module de supervision d'un système de recharge de véhicules électriques, le système de recharge de véhicules électriques comportant une pluralité de bornes de recharge comprenant au moins une borne de recharge à énergie électrique alternative, le module de supervision étant configuré pour mettre en œuvre :

- un module de réception des messages envoyés par chaque borne de recharge, et d'obtention, à partir de chaque borne de recharge, d'une représentation spectrale du courant consommé, calculée par application d'une transformation spectrale sur un signal numérisé de courant consommé sur ladite borne de recharge, ladite représentation spectrale comportant une pluralité de couples de valeurs d'amplitude et de phase, chaque couple étant associé à un rang spectral,
- un module de détermination d'une représentation spectrale globale du système de recharge à partir des représentations spectrales du courant consommé par borne de recharge et par rang spectral,
- un module de calcul d'au moins un paramètre d'au moins un courant de compensation, en fonction de la représentation spectrale globale du système de recharge et d'au moins un seuil de dégradation de facteur de puissance prédéterminé.

Selon un aspect, le module de supervision est configuré en outre pour transmettre ledit au moins un d'au moins un courant de compensation à un dispositif de compensation.

Selon un autre aspect, l'invention concerne une borne de recharge à courant continu d'un système de recharge de véhicules électriques tel que décrit ci-dessus, la borne de recharge étant configurée pour recharger un véhicule électrique connecté sur ladite borne de recharge et pour communiquer avec le module de supervision via une liaison de communication, la borne de recharge étant configurée pour recevoir dudit module de supervision au moins un paramètre d'au moins un courant de compensation, générer au moins un courant de compensation utilisant ledit au moins un paramètre et injecter ledit au moins un courant de compensation généré dans le réseau de distribution.

L'invention apparaîtra plus clairement à la lecture de la description qui va suivre, donnée uniquement à titre d'exemple non limitatif, et faite en référence aux dessins dans lesquels :

la figure 1 est une représentation schématique d'un système de recharge de véhicules électriques et des véhicules électriques connectés ;
la figure 2 est un synoptique des principaux blocs fonctionnels des éléments d'un système de recharge selon un mode de réalisation ;
la figure 3 est un exemple de courant consommé et de représentation spectrale associée ;

la figure 4 est un logigramme des principales étapes d'un procédé de recharge de véhicules électriques selon un mode de réalisation.

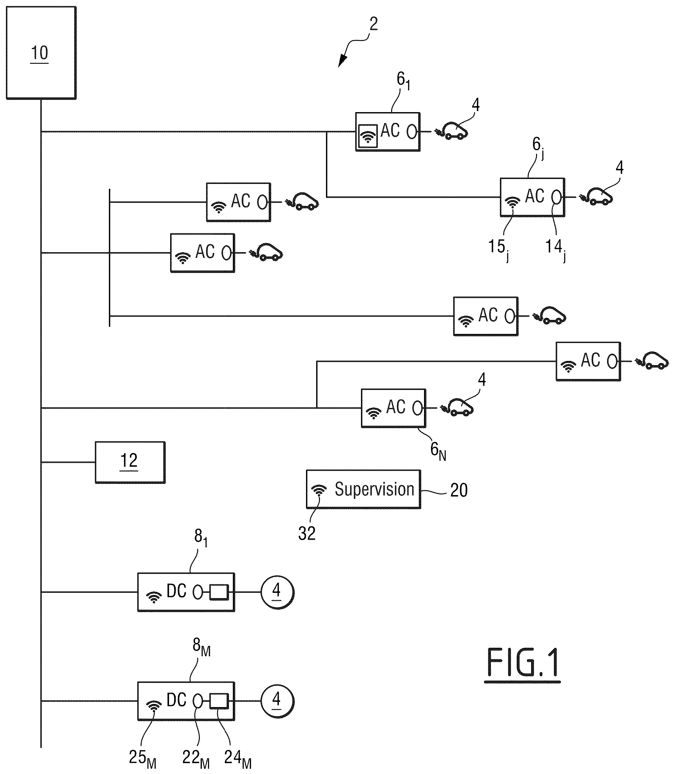

La figure 1 représente schématiquement, à titre d'exemple simplifié, un système de recharge 2 de véhicules électriques et des véhicules électriques, EV, référencés par la référence générale 4 sur la figure 1, connectés chacun à une borne de recharge $6_1$ à $6_N$ à courant alternatif ou à une borne de recharge $8_1$ à $8_M$ à courant continu du système de recharge 2. Les bornes de recharge à courant alternatif sont appelées bornes de recharge AC ci-après, et référencées par la référence générale 6, et les bornes de recharge à courant continu sont appelées bornes de recharge DC ci-après, et référencées par la référence générale 8.

En d'autres termes, le système de recharge représenté à titre d'exemple comporte N+M bornes de recharge, N et M étant des entiers positifs.

De plus, bien entendu, la présence d'un véhicule électrique à chaque borne de recharge est illustrée à titre d'exemple, dans le cas où le système de recharge 2 est utilisé à sa capacité maximale. Il est clair qu'un nombre quelconque de véhicules électriques, compris entre 1 et N+M, peut être connecté simultanément pour effectuer une recharge de batterie à un instant donné.

Par la suite, on considère que le nombre N+M désigne le nombre de bornes de recharge sollicitées pour la fourniture d'énergie électrique, N désignant le nombre de bornes de recharge AC et M le nombre de bornes de recharge DC.

Dans un cas particulier M=1 et N est strictement supérieur à 1.

Les bornes de recharge du système de recharge 2 sont alimentées en énergie électrique par une ou plusieurs sources d'énergie électrique 10.

Par exemple, la source d'énergie électrique 10 est un réseau de distribution d'énergie électrique alternative. Par exemple, le réseau de distribution d'énergie électrique est de type triphasé (i.e. 3 phases de courant et un neutre) et plus généralement multi-phasé.

Les bornes de recharge AC $6_1$ à $6_N$ sont configurées pour fournir à des véhicules électriques une énergie électrique alternative, chaque véhicule électrique mettant en œuvre un convertisseur AC-DC pour charger sa batterie.

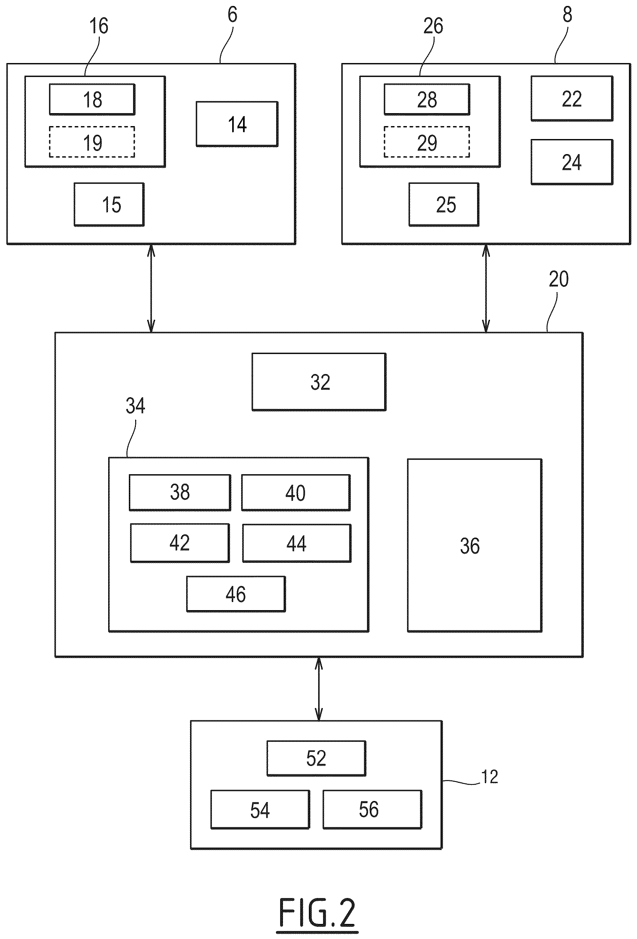

Les bornes de recharge DC $8_1$ à $8_M$ sont configurées pour fournir à des véhicules électriques une énergie électrique continue, permettant au véhicule électrique de charger sa batterie sans conversion supplémentaire, tout en étant alimentées par le réseau de distribution d'énergie électrique 10 d'énergie alternative. Chaque borne de recharge DC comporte un convertisseur 24 (visible sur la figure 2) du courant d'entrée alternatif consommé par la borne de recharge DC, en courant continu.

Le système de recharge 2 comporte en outre au moins un dispositif de compensation 12 adapté pour injecter un courant électrique, appelé courant de compensation, dans le réseau de distribution 10.

Dans un mode de réalisation, le dispositif de compensation 12 est un dispositif dédié.

Dans un autre mode de réalisation, le dispositif de compensation 12 est une des bornes de recharge DC.

Dans un autre mode de réalisation, chaque borne de recharge DC est un dispositif de compensation 12 du système de recharge.

Le système de recharge 2 comporte en outre un module de supervision 20, configuré pour communiquer avec les bornes de recharge AC et avec les bornes de recharge DC.

Dans un mode de réalisation, le module de supervision 20 est intégré dans une des bornes de recharge DC, et est configuré pour communiquer avec les bornes de recharge AC 6 et avec les autres bornes de recharge DC, le cas échéant, lorsque plusieurs bornes de recharge DC sont présentes dans le système de recharge 2.

Chaque borne de recharge AC $6_j$ fournit l'énergie électrique selon un profil d'alimentation associé, le profil comprenant une valeur de courant maximale (ou valeur efficace) $I_{max\_j}$, une valeur de puissance maximale $P_{max\_j}$ et un coefficient de déclassement $\alpha_j$ à appliquer. La tension alternative fournie par chaque borne de recharge est la tension alternative fournie par la source d'énergie électrique 10, de tension efficace U.

Également la ou chaque borne de recharge DC $8_i$ fournit une l'énergie électrique selon un profil d'alimentation associé, le profil comprenant une valeur de courant continu fourni, une valeur de puissance fournie et un coefficient de déclassement $\beta_i$ à appliquer.

Un coefficient de déclassement $\alpha j$, $\beta i$ est une valeur réelle, variant entre une valeur inférieure, par exemple 0 et une valeur supérieure, par exemple 1.

Le coefficient de déclassement est appliqué comme facteur multiplicatif d'un paramètre d'énergie électrique délivrée par la borne de recharge, par exemple sur la valeur de courant ou de puissance fournie par la borne de recharge.

Ainsi, chaque borne de recharge $6_j$, $8_i$ est configurée pour fournir une énergie électrique dont le paramètre d'énergie électrique considéré est multiplié par le coefficient de déclassement $\alpha_j$, $\beta_i$.

Par défaut, chaque coefficient de déclassement $\alpha_j$, $\beta_i$ est égal à 1, en d'autres termes aucun déclassement de fourniture d'énergie n'est appliqué.

Le calcul et la mise à jour du coefficient de déclassement $\alpha_j$, $\beta_i$ associé à chaque profil d'alimentation associé à une borne de recharge sera décrit plus en détail ci-après, selon les modes de réalisation.

Chacune des bornes de recharge 6, 8 comporte des blocs fonctionnels similaires, décrits en référence à la figure 2.

Chaque borne de recharge AC 6 comporte une interface de communication désignée par la référence générale 15 (représentée dans la figure 2), configurée pour communiquer, en émission et en réception, selon un protocole de communication donné. Par exemple, l'interface de communication 15 est configurée pour communiquer selon un protocole de communication sans fil, par exemple selon le protocole 4G, 5G, Wifi etc.

En variante, l'interface de communication 15 est configurée pour communiquer selon un protocole de communication filaire, par exemple selon le protocole Modbus, par courant porteur etc.

Lorsqu'un véhicule électrique 4 se connecte à une borne de recharge 6, via un connecteur adéquat, une fourniture d'énergie électrique alternative est mise en œuvre, pour effectuer la recharge de la batterie du véhicule électrique. Comme expliqué, le véhicule électrique comporte un convertisseur AC-DC embarqué (non représenté) qui transforme le courant électrique alternatif en courant continu pour la recharge de la batterie. Le courant électrique utilisé par le véhicule électrique est appelé par la suite courant consommé.

Chaque borne de recharge 6 comporte un ou plusieurs capteurs de courant 14, configuré(s) pour mesurer le courant consommé par un véhicule électrique connecté à la borne de recharge. Le courant consommé mesuré est numérisé, cette numérisation comportant un échantillonnage à une fréquence d'échantillonnage F, la fréquence d'échantillonnage F étant avantageusement choisie en fonction de l'harmonique maximale que l'on souhaite mesurer. Une série d'échantillons de courant consommé sur une durée d'échantillonnage forme un signal numérisé de courant consommé, la durée d'échantillonnage étant au moins égale à une période du signal électrique, soit au moins égale à 20ms pour un réseau de distribution à 50Hz.

En outre, la borne de recharge 6 comporte également un contrôleur électronique 16, qui comprend un module 18 de gestion de la fourniture d'énergie électrique à un véhicule électrique connecté. En plus de fonctionnalités de gestion d'énergie électrique en fonction du type de véhicule électrique, effectuées de manière classique et non décrites plus en détail ici, le module 18 est configuré pour appliquer, selon divers modes de réalisation, le coefficient de déclassement associé au profil d'alimentation fourni par la borne de recharge 6.

Optionnellement, dans un mode de réalisation, le contrôleur électronique 16 comporte un module 19 de transformation spectrale, configuré pour appliquer une transformation sur un signal numérisé de courant consommé et obtenir une représentation spectrale du courant consommé. Par exemple, le module 19 met en œuvre une transformation de Fourier, et plus particulièrement une transformation de Fourier rapide ou FFT (pour « Fast Fourier Transform »). Selon une variante, le module 19 de transformation spectrale est intégré dans le capteur de courant 14.

Dans un mode de réalisation, chacun des modules 18, 19 du contrôleur électronique 16 est réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*), un automate, un ou plusieurs processeurs, ou tout autre circuit de calcul.

Chaque borne de recharge DC 8 comporte une interface de communication 25, configurée pour communiquer, en émission et en réception, selon un protocole de communication donné. Par exemple, l'interface de communication 25 est configurée pour communiquer selon un protocole de communication sans fil, par exemple selon le protocole 4G, 5G, Wifi etc.

En variante, l'interface de communication 25 est configurée pour communiquer selon un protocole de communication filaire, par exemple selon le protocole Modbus, par courant porteur etc.

Lorsqu'un véhicule électrique 4 se connecte à une borne de recharge 8, via un connecteur adéquat, une fourniture d'énergie électrique continue est mise en œuvre.

La borne de recharge 8 comporte en outre un ou plusieurs capteurs de courant 22, ainsi qu'un convertisseur 24 d'énergie électrique AC-DC, qui transforme le courant électrique d'entrée alternatif, fourni par le réseau de distribution 10, en courant continu, qui est fourni en sortie de la borne de recharge DC 8, à un véhicule électrique 4.

Le convertisseur 24 est par exemple un convertisseur de type PFC (pour « Power Factor Correction »).

Un capteur de courant 22 est configuré pour mesurer le courant électrique d'entrée alternatif consommé par la borne de recharge DC 8, appelé également courant consommé par la borne de recharge 8. Le courant consommé mesuré est numérisé, cette numérisation comportant un échantillonnage à une fréquence d'échantillonnage F, la fréquence d'échantillonnage F étant avantageusement choisie en fonction de l'harmonique maximale que l'on souhaite mesurer. Une série d'échantillons de courant consommé sur une durée d'échantillonnage forme un signal numérisé de courant consommé, la durée d'échantillonnage étant au moins égale à une période du signal électrique, soit au moins égale à 20ms pour un réseau de distribution à 50Hz.

En outre, la borne de recharge 8 comporte également un contrôleur électronique 26, qui comprend un module 28 de gestion de la fourniture d'énergie électrique à un véhicule électrique connecté. Optionnellement, lorsque la borne de recharge DC 8 est utilisée comme dispositif de compensation 12, le module 28 est configuré pour générer un courant de compensation et pour injecter, en coopération avec le convertisseur 24, le courant de compensation généré dans le réseau de distribution. En effet, le module 28 contrôle le convertisseur 24, en imposant des paramètres de consigne à ce convertisseur. En d'autres termes, le convertisseur 24 est commandable pour la fourniture d'énergie électrique à un véhicule électrique connecté et pour la génération dans le réseau de distribution 10 d'un courant de compensation.

En plus de fonctionnalités de gestion d'énergie électrique en fonction du type de véhicule électrique, le module 28 est configuré pour appliquer, selon les modes de réalisation, le coefficient de déclassement $\beta$ associé au profil d'alimentation fourni par la borne de recharge 8.

Optionnellement, dans un mode de réalisation, le contrôleur électronique 26 comporte un module 29 de transformation spectrale, configuré pour appliquer une transformation sur un signal numérisé de courant consommé et obtenir une représentation spectrale du courant consommé. Par exemple, le module 29 met en œuvre une transformation de Fourier, et plus particulièrement une transformation de Fourier rapide ou FFT (pour « Fast Fourier Transform »). Selon une variante, le module 29 de transformation spectrale est intégré dans le capteur de courant 22.

Dans un mode de réalisation, chacun des modules 28, 29 du contrôleur électronique 26 est réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*), un automate, un ou plusieurs processeurs, ou tout autre circuit de calcul.

Chaque borne de recharge 6, 8 est configurée pour communiquer avec le module de supervision 20, le module de supervision 20 étant équipé d'une interface de communication 32, configurée pour communiquer avec les bornes de recharge AC 6 et DC 8 respectives.

Ainsi, dans le système de recharge 2, les bornes de recharge 6, 8 sont configurées pour communiquer avec le module de supervision 20 via une liaison de communication, cette liaison de communication étant bidirectionnelle, selon un protocole de communication filaire ou sans fil, selon les cas de figure.

Chaque borne de recharge AC 6 est configurée pour émettre vers le module de supervision 20, via la liaison de communication, dans un message dédié, des données relatives au signal numérisé de courant consommé par le véhicule électrique connecté à une borne de recharge 6.

Chaque borne de recharge DC 8 est configurée pour émettre vers le module de supervision 20, via la liaison de communication, dans un message dédié, des données relatives au signal numérisé de courant consommé par la borne de recharge 8.

Dans un mode de réalisation, les données relatives au signal numérisé de courant consommé sont la représentation spectrale du courant consommé obtenue par transformation spectrale du signal numérisé de courant consommé sur la borne de recharge.

Selon un mode de réalisation alternatif, les données relatives au signal numérisé de courant consommé sont les mesures successives de courant consommé formant le signal numérisé de courant consommé. Dans ce mode de réalisation, la transformation spectrale sur chaque signal numérisé de courant consommé est effectuée par le module de supervision 20, comme expliqué plus en détail ci-après.

Le module de supervision 20 comporte en outre un processeur de calcul 34 et une mémoire électronique 36, configurés pour communiquer entre eux et avec l'interface de communication 32 via un bus de communication interne.

Le processeur de calcul 34 est configuré pour mettre en œuvre un module 38 d'obtention d'une représentation spectrale du courant consommé pour chaque borne de recharge, suite à une réception des messages comprenant des données relatives au signal numérisé de courant consommé sur chaque borne de recharge.

Pour une borne de recharge donnée, la représentation spectrale est calculée par application d'une transformation spectrale sur le signal numérisé de courant consommé sur la borne de recharge. La représentation spectrale comporte une pluralité de couples de valeurs d'amplitude et de phase, chaque couple étant associé à un rang spectral du courant consommé. Les rangs spectraux k, pour k strictement supérieur à 1, sont également appelés rangs harmoniques, le rang spectral k=1 étant appelé rang fondamental.

Dans un mode de réalisation, la représentation spectrale du courant consommé est reçue de chaque borne de recharge, les bornes de recharge respectives comportant des modules 19, 29 de transformation spectrale.

Dans un autre mode de réalisation, les bornes de recharge respectives 6, 8 transmettant au module de supervision des valeurs d'échantillon relatives du signal numérisé de courant consommé, et le module 38 réalise la transformation spectrale de chaque signal numérisé de courant consommé reçu.

De plus, le processeur de calcul 34 est configuré pour mettre en oeuvre :

- un module 40 de détermination d'une représentation spectrale globale du système de recharge à partir des représentations spectrales du courant consommé par borne de recharge et par rang spectral,
- un module 42 de calcul d'au moins un paramètre d'au moins un courant de compensation, également appelé paramètre de compensation, en fonction de représentation spectrale globale du système de recharge et d'au moins un seuil de dégradation de facteur de puissance prédéterminé ;
- optionnellement, un module 44 de calcul d'au moins un coefficient de déclassement à appliquer par au moins une borne de recharge à courant alternatif et/ou par au moins une borne de recharge à courant continu, et un module 46 de commande de l'au moins une des bornes de recharge pour appliquer l'au moins un coefficient de déclassement calculé pour diminuer un paramètre d'énergie électrique fournie, le paramètre électrique définissant par exemple une puissance, un courant ou une tension fourni au véhicule électrique connecté à la borne.

Le module de supervision 20 est en outre configuré pour transmettre l'au moins un paramètre d'au moins un courant de compensation au dispositif de compensation 12.

Dans un mode de réalisation, les modules 38, 40, 42, 44 et 46 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Dans un autre mode de réalisation, les modules 38, 40, 42, 44 et 46 sont réalisés sous forme de programme logique exécutable par un ou plusieurs processeurs.

Le dispositif de compensation 12 est également équipé d'une interface de communication 52, configurée pour communiquer avec le module de supervision et optionnellement, avec les bornes de recharge 6,8.

Le dispositif de compensation 12 comporte un module 54 de génération d'un courant de compensation utilisant le ou les paramètres du courant de compensation, et un module 56 d'injection dans le réseau de distribution d'électricité 10, du courant de compensation généré.

Dans le cas de figure où le dispositif de compensation 12 est une borne de recharge DC 8, les modules 54 de génération d'un courant de compensation et 56 d'injection sont mis en œuvre par le module 28 de gestion en coopération avec le convertisseur 24.

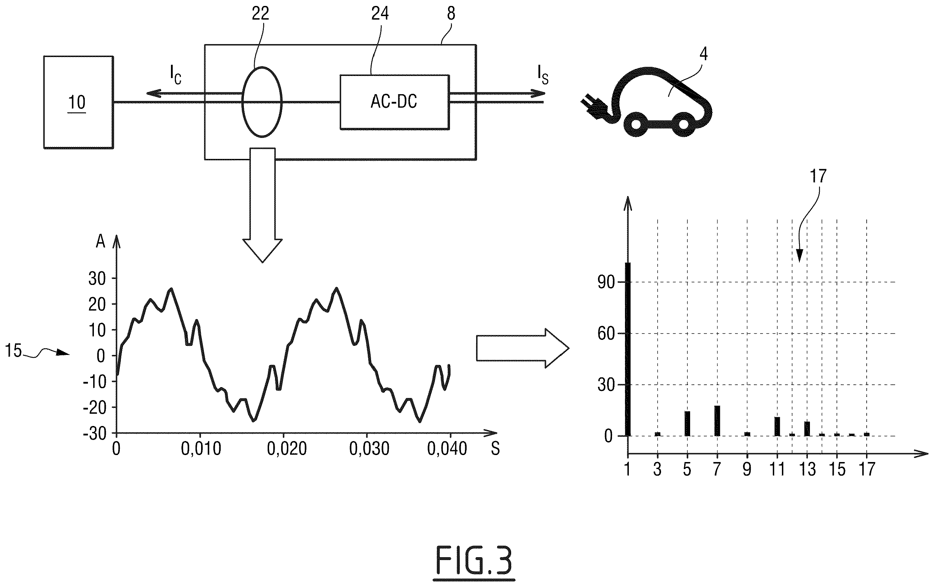

La figure 3 illustre, à titre d'exemple, un profil 15 de courant en entrée d'un convertisseur AC-DC 24 d'une borne 8 de recharge DC, sur laquelle le véhicule électrique 4 consomme un courant continu $I_S$, la borne de recharge 8 injectant en outre un courant de compensation Ic sur le réseau de distribution 10.

Le capteur de courant 22 fournit des mesures successives du courant consommé par la borne de recharge 8, formant un profil de courant 15. Le profil 15 du courant consommé est représenté par des mesures de courant instantané, en Ampères (axe des ordonnées), en fonction du temps (axe des abscisses) exprimé en secondes. Le graphe 17 représente des valeurs d'amplitudes spectrales obtenues à partir du profil de courant 15. Le graphe 17 représente des valeurs d'amplitude en Ampères en ordonnée en fonction des rangs spectraux en abscisse.

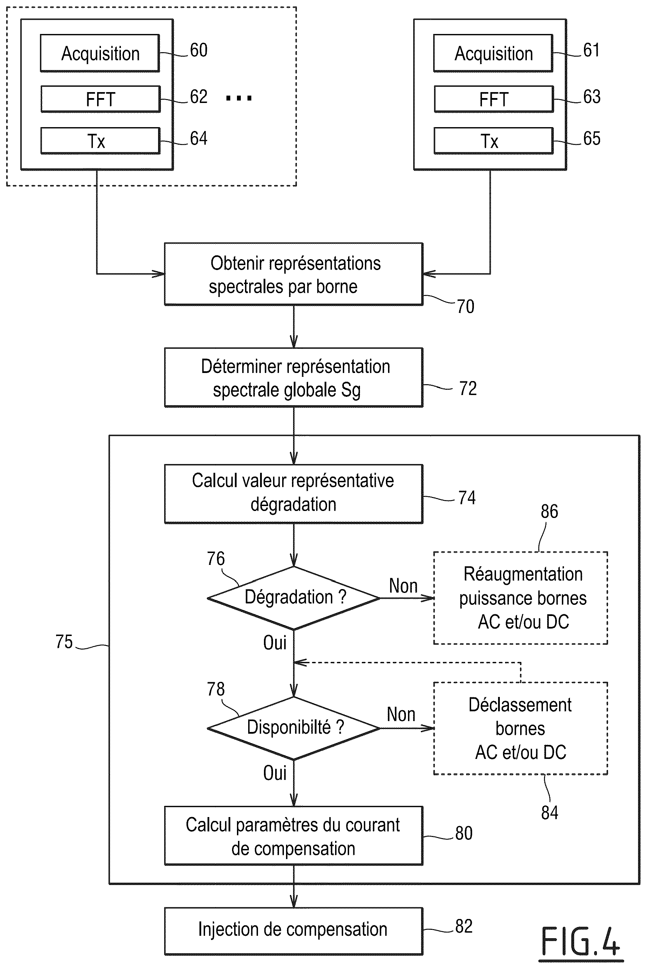

La figure 4 est un synoptique des principales étapes d'un procédé de recharge de véhicules électriques, mis en œuvre par un système de recharge de véhicules électriques tel que décrit ci-dessus, dans un mode de réalisation.

Le procédé comprend des étapes mises en œuvre par chaque borne de recharge AC $6_1$,.., $6_j$,..., $6_N$, et chaque borne de recharge DC $8_1$...$8_M$, des étapes mises en œuvre par le module de supervision et des étapes mises en œuvre par le dispositif de compensation.

Chaque borne de recharge AC, et plus particulièrement le capteur 14 de la borne de recharge AC, met en œuvre une étape 60 d'acquisition de mesures d'intensité de courant électrique instantané consommé par un véhicule électrique connecté à la borne de recharge AC, et de formation d'un signal numérisé de courant consommé.

Le signal numérisé de courant consommé est formé d'échantillons $\{I_{j1},...I_{jQ}\}$, Q étant un nombre d'échantillons prédéterminé, Q étant choisi en fonction de la fréquence d'échantillonnage F prédéterminée et de la durée d'échantillonnage choisie. La durée d'échantillonnage est avantageusement choisie supérieure ou égale à une période du signal électrique fourni par le réseau de distribution, et de préférence égale à un multiple de périodes du signal électrique fourni par le réseau de distribution, par exemple de 10 à 20 périodes. Selon des modes de réalisation, un moyennage des valeurs de courant consommé sur plusieurs périodes successives du signal électrique fourni par le réseau de distribution est appliqué.

Selon un mode de réalisation, le module de transformation spectrale 19 de chaque borne de recharge AC réalise une transformation spectrale à l'étape 62 de transformation spectrale sur le signal numérisé de courant consommé, pour obtenir une représentation spectrale du courant consommé par le véhicule électrique connecté à la borne de recharge AC.

La transformation spectrale est par exemple une transformation de Fourier discrète.

De préférence, une transformation spectrale rapide FFT (pour « Fast Fourier Transform ») est réalisée, et permet d'obtenir une représentation du courant électrique consommé appelée ci-après représentation spectrale du courant consommé, et plus simplement représentation spectrale.

Pour une borne $6_j$, la représentation spectrale $S_j=[(b_{j1},c_{j1});(b_{j2},c_{j2});....,(b_{jQ}, c_{jQ})]$ comprend des couples $(b_{jk}, c_{jk})$ de valeurs d'amplitude $b_{jk}$ et de phase $c_{jk}$, k étant le rang spectral associé.

La représentation spectrale $S_j$ associée à chaque borne $6_j$, ou au moins une partie correspondant aux P premiers rangs spectraux, avec P un entier par exemple égal à 25, est émise (étape 64) par chaque borne de recharge vers le module de supervision, sous forme de message, par chaque borne de recharge, via son interface de communication.

En effet, en pratique, il peut être considéré que seuls les P premiers rangs spectraux présentent un intérêt pour caractériser les phénomènes électriques observés.

De manière analogue, chaque borne de recharge DC $8_1$ à $8_M$ met en œuvre une étape d'acquisition 61 comportant la mesure d'intensité de courant électrique instantané consommé, par un capteur 22, en entrée du convertisseur 24, et la formation d'un signal numérisé de courant consommé, puis une étape 63 de transformation spectrale et une étape 65 de transmission de la représentation spectrale calculée au module de supervision.

Pour une borne $8_j$ la représentation spectrale $T_j=[(f_{j1},g_{j1});(f_{j2},g_{j2});....,(f_{jQ}, g_{jQ})]$ comprend des couples $(f_{jk}, g_{jk})$ de valeurs d'amplitude $f_{jk}$ et de phase $g_{jk}$, k étant le rang spectral associé.

La représentation spectrale $T_j$ associée à chaque borne $8_j$, ou au moins une partie correspondant aux P premiers rangs spectraux, avec P un entier par exemple égal à 25, est émise (étape 65) par chaque borne de recharge vers le module de supervision, sous forme de message, par chaque borne de recharge, via son interface de communication.

En effet, en pratique, il peut être considéré que seuls les P premiers rangs spectraux présentent un intérêt pour caractériser les phénomènes électriques observés.

Le module de supervision 20 met en oeuvre une étape 70 d'obtention des représentations spectrales $S_1$ à $S_N$ associées à chaque borne de recharge $6_1$ à $6_N$, et des représentations spectrales associées à chaque borne de recharge DC $8_1$ à $8_M$, suite à la réception, via son interface de communication 32, des messages transmis par chaque borne de recharge.

Selon une variante, les bornes de recharge $6_1$ à $6_N$, $8_1$ à $8_M$ transmettent chacune le signal numérisé de courant consommé, et le module de supervision 20 réalise une transformation spectrale pour obtenir la représentation spectrale de chaque signal numérisé de courant consommé reçu. Dit autrement, dans cette variante, l'étape 70 d'obtention des représentations spectrales $S_1$ à $S_N$ associées à chaque borne de recharge $6_1$ à $6_N$ et des représentations spectrales $T_1$ à $T_M$ associées à chaque borne de recharge $8_1$ à $8_M$ comporte la réception du signal numérisé de courant consommé de chaque borne de recharge et l'application de la transformation spectrale. La transformation spectrale est par exemple une transformation de Fourier discrète, et de préférence une FFT.

Le module de supervision 20 met en œuvre ensuite une étape 72 de détermination d'une représentation spectrale globale Sg du système de recharge à partir des représentations spectrales par borne de recharge, pour les P rangs spectraux.

L'étape de détermination 72 met en oeuvre, pour chaque rang spectral k compris entre 1 et P, une sommation vectorielle des vecteurs définis par les couples $(b_{jk},c_{jk})$ des représentations spectrales par borne de recharge, pour j allant de 1 à N et des couples $(f_{jk},g_{jk})$ pour j allant de 1 à M, la sommation vectorielle permettant d'obtenir un vecteur résultant pour le rang spectral k. Les valeurs respectives d'amplitude $s_k$ et de phase $t_k$ de la représentation spectrale globale sont alors l'amplitude et la phase du vecteur résultant pour le rang spectral k.

La représentation spectrale globale $Sg=\{(s_1,t_1);... (s_j,t_j);...(s_P,t_P)\}$ est obtenue à l'issue de l'étape de détermination 72.

Le procédé comprend alors un calcul 75 d'au moins un paramètre de courant de compensation, à injecter dans le réseau de distribution par le dispositif de compensation, lorsqu'une dégradation du facteur de puissance est constatée.

Cette étape de calcul 75 comprend une étape 74 de calcul d'une valeur représentative d'une dégradation du facteur de puissance, également appelée valeur de dégradation ci-après, V(Sg), en fonction de la représentation spectrale globale du système.

De préférence, la valeur représentative d'une dégradation du facteur de puissance V(Sg) est une ou une combinaison de :

- la puissance réactive $P_r$ du système de recharge, calculée à partir de $(s_1,t_1)$,
- la distorsion harmonique totale, DHT
- une distorsion harmonique partielle, DHP$(k_1,...,k_l)$ selon un ou plusieurs rangs harmoniques (ou rangs spectraux strictement supérieurs à 1), $k_1,...,k_l$, prédéterminés.

La puissance réactive $P_r$ du système de recharge est calculée par la formule :

[MATH 1]

$$P_r = \sqrt{3} \times U \times s_1 \times \sin(t_1)$$

dans le cas où le courant est triphasé, où U est la tension efficace fournie par le système de recharge, $(s_1,t_1)$ les valeurs d'amplitude et de phase de la représentation spectrale de courant consommé de rang spectral 1.

La distorsion harmonique totale, exprimée en Ampères (A), DHT est calculée par la formule :

[MATH 2]

$$DHT = \sqrt{s_2^2 + \cdots + s_j^2 + .. + s_P^2}$$

La distorsion harmonique partielle, exprimée en Ampères, DHP($k_1$,...,$k_l$) selon un ou plusieurs rangs harmoniques $k_1$,...,$k_l$ prédéterminés est calculée par la formule :

[MATH 3]

$$DHP(k1, k2, .., kl) = \sqrt{s_{k1}^2 + \cdots + s_{kl}^2}$$

Par exemple, si l'on considère les rangs harmoniques 5 et 7, la distorsion harmonique partielle correspondante est obtenue par :

[MATH 4]

$$DHP(5,7) = \sqrt{s_5^2 + s_7^2}$$

Les formules respectives de calcul de la valeur de dégradation sont également appelées métriques de calcul de dégradation du facteur de puissance.

En d'autres termes, la valeur de dégradation est calculée selon une métrique de calcul de dégradation du facteur de puissance.

Par exemple, lorsque la valeur de dégradation considérée est la puissance réactive du système de recharge, la métrique de calcul de dégradation du facteur de puissance de formule [MATH 1] est appliquée à l'étape 74, et V(Sg)=$P_r$.

En variante, lorsque la valeur de dégradation considérée est la distorsion harmonique totale DHT, la formule [MATH 2] est appliquée à l'étape 74, et V(Sg)=DHT.

En variante, lorsque la valeur de dégradation considérée est une distorsion harmonique partielle DHP($k_1$,..$k_l$), la formule [MATH 3] est appliquée à l'étape 74, et V(Sg)=DHP($k_1$,..$k_l$).

Selon une autre variante, décrite de manière plus détaillée ci-après, plusieurs métriques de calcul de valeurs de dégradation du facteur de puissance sont appliquées.

Il est alors vérifié à l'étape de vérification 76 si une condition de dégradation non acceptable du facteur de puissance est constatée. Dans le mode de réalisation de la figure 4, lors de l'étape de vérification 76, la valeur de dégradation de facteur de puissance calculée est comparée à un seuil de dégradation S_DH.

Par exemple, lorsque la dégradation du facteur de puissance est due à la présence d'une puissance réactive, la valeur de dégradation considérée est la puissance réactive du système de recharge, le seuil de dégradation S_DH est une puissance réactive maximale autorisée Prmax, exprimée en kVAR (kilo voltampères réactifs).

Par exemple, la puissance réactive maximale autorisée est de 60kVAR pour un système dimensionné à 1000 kVA.

Lorsque la dégradation du facteur de puissance est due à la présence d'harmoniques, le seuil de dégradation S_DH est choisi comme étant égal à une valeur maximale de la distorsion harmonique totale (DHT) ou de la distorsion harmonique partielle. Cette valeur maximale peut être exprimée en Ampère (i.e. définition d'une valeur absolue maximale du courant harmonique) ou en pourcentage du courant fondamental (i.e. de rang spectral 1).

Par exemple, lorsque la valeur de dégradation considérée est la distorsion harmonique totale DHT, le seuil de dégradation S_DH correspondant est une valeur maximale de distorsion harmonique totale autorisée, par exemple égal à 50A, et plus généralement compris entre 20A et 100A pour un système dimensionné à 1000 A.

Par exemple, lorsque la valeur de dégradation considérée est la distorsion harmonique partielle DHP(k1,kl), le seuil de dégradation S_DH correspondant est une valeur maximale de distorsion harmonique partielle autorisée pour les rangs $k_1$,...,$k_l$ considérés, en Ampères.

Lorsque la dégradation du facteur de puissance est due à la fois à la présence d'une puissance réactive et à la présence d'harmoniques, on peut définir plusieurs seuils de dégradation similaires au seuil S_DH précédemment décrit. On peut aussi dans ce cas définir un seuil de dégradation unique englobant les deux types de dégradations, par exemple en considérant que la puissance réactive maximale autorisée Prmax correspond à un courant réactif maximal autorisé, et en définissant le seuil de dégradation en fonction du courant réactif maximal autorisé et du courant harmonique maximal autorisé.

Dans un mode de réalisation, le seuil S_DH peut correspondre à la somme quadratique du courant réactif maximal autorisé et du courant harmonique maximal autorisé.

Lorsque la condition de dégradation de facteur de puissance est vérifiée, i.e. lorsque la valeur de dégradation considérée dépasse le seuil de dégradation correspondant, l'étape de comparaison 76 est suivie d'une étape 78 de vérification de disponibilité du ou des dispositif(s) de compensation

On entend par disponibilité une réserve de puissance ou de courant, permettant de générer un courant de compensation à injecter dans le réseau de distribution.

Par exemple, dans le mode de réalisation où les M bornes de recharge DC sont les dispositifs de compensation, il est vérifié lors de l'étape de vérification de disponibilité 78 si les bornes de recharge DC disposent d'une réserve de puissance ou de courant disponible, permettant de générer un courant de compensation.

Pour une borne de recharge DC, la réserve de puissance (resp. de courant) disponible est égale à la différence entre la puissance maximale $P_{max}$ (resp. le courant maximal $I_{max}$) que la borne de recharge est capable de fournir et la puissance effective (resp. le courant) consommée par le convertisseur qui alimente le véhicule connecté.

Lorsque M=1, la réserve de puissance ou de courant de la borne de recharge DC est prise en considération.

Lorsque M est strictement supérieur à 1, la somme des réserves de puissance ou de courant des M bornes de recharge DC respectives est considérée.

Dans un mode de réalisation, la disponibilité est validée (réponse oui à l'étape de vérification de disponibilité 78) lorsque la réserve de puissance ou de courant disponible est suffisante pour compenser la dégradation du facteur de puissance constatée par le ou les dispositifs de compensation.

En cas de disponibilité (oui à l'étape de vérification de disponibilité 78), l'étape 78 est suivie d'une étape 80 de calcul des paramètres du courant de compensation, à générer par le ou chaque dispositif de compensation, par exemple par borne de recharge DC.

Les paramètres calculés forment des consignes de courant fondamental pour les dispositifs de compensation, par exemple pour les bornes de recharge DC. Ces consignes qui sont transmises aux différents dispositifs de compensation pour génération et injection 82 des courants de compensation dans le réseau.

Ainsi, par exemple, lorsque la dégradation du facteur de puissance est due à la présence d'une puissance réactive, i.e. la puissance réactive $P_r$ consommée par le système de recharge, est supérieure à la puissance réactive maximale autorisée Prmax, il est vérifié si les bornes de recharge DC disposent de suffisamment de réserve de puissance ou de courant pour générer une puissance réactive en opposition à la puissance réactive consommée.

La valeur de la puissance réactive à générer est :

[MATH 5]

$$\sqrt{3} \times U \times s_1 \times \sin(t_1) - Prmax$$

Lorsque le système de recharge comprend plusieurs bornes de recharge DC (M>1), selon un mode de réalisation, la génération de puissance réactive est attribuée à chacune des bornes disponibles, proportionnellement aux capacités disponibles de chaque borne de recharge DC.

Bien entendu, d'autres stratégies d'attribution de puissance réactive à générer par borne de recharge DC sont envisageables.

Des valeurs de paramètres de courant de compensation par borne de recharge DC, les paramètres étant l'amplitude $f'_{i1}$ et la phase $g'_{i1}$ au rang spectral 1 par borne de recharge DC $8_i$ sont calculés à l'étape de calcul de paramètres 80. Ces paramètres calculés forment des consignes de courant fondamental pour les bornes de recharge DC, qui sont transmises aux différentes bornes de recharge DC pour génération et injection 82 du courant de compensation dans le réseau.

Selon un autre exemple, lorsque la dégradation du facteur de puissance est due à la distorsion harmonique totale, les paramètres de compensation calculés à l'étape 80 sont des valeurs de paramètres d'amplitude et de phase pour les rangs harmoniques 2 à P.

Par exemple, les courants de compensation à générer sont calculés par rapport à la représentation globale du système de recharge, les courants de compensation à générer étant en opposition de phase par rapport à la représentation harmonique globale du système de recharge : $\{(s'_k, t'_k)\}$ où $t'_k = 180° - t_k$, avec $2 \leq k \leq P$.

Des ensembles de paramètres des représentations spectrales caractérisant les courants de compensation à générer sont calculés. Par exemple, lorsque le système comporte M bornes DC qui forment des dispositifs de compensation, des ensembles de paramètres $\{(f'_{12}, g'_{12}),...,(f'_{1p}, g'_{1p})\}$ à $\{(f'_{M2}, g'_{M2}),...,(f'_{Mp}, g'_{Mp})\}$ sont calculés à l'étape 80.

Ces paramètres calculés forment des consignes de courant d'entrée pour les bornes de recharge DC, qui sont transmises aux différentes bornes de recharge DC pour génération et injection 82 des courants de compensation dans le réseau.

Selon un autre exemple, lorsque la dégradation du facteur de puissance est due à une distorsion harmonique partielle, selon les rangs harmoniques k1...kl, des paramètres de compensation pour générer des courant de compensation permettant de compenser les courants harmoniques k1...kl sont calculés et transmis aux dispositifs de compensation, par exemple aux bornes de recharge DC, pour injection des courants de compensation dans le réseau.

Dans le cas où la ou les bornes de recharge DC ne sont pas disponibles (réponse négative à l'étape de vérification de disponibilité 78), et plus généralement en cas d'indisponibilité du ou des dispositifs de compensation, l'étape 78 est suivie d'une étape 84 de déclassement d'une ou plusieurs des bornes de recharge AC et/ou DC.

Le déclassement des bornes de recharge AC a pour effet de réduire la dégradation du facteur de puissance induite par les bornes de recharge AC.

Le déclassement des bornes de recharge DC a pour objet de réduire la puissance fournie par les bornes de recharge DC aux véhicules respectifs, et par conséquent de libérer une réserve de puissance pour permettre la génération et l'injection d'un courant de compensation.

Dans les deux cas de figure, le déclassement des bornes de recharge a pour effet de permettre une réduction de la dégradation du facteur de puissance du système de recharge 2.

L'étape 84 met en œuvre le calcul d'au moins un coefficient de déclassement $\alpha_i$ à appliquer par au moins une des bornes de recharge AC $6_i$ et/ou d'au moins un coefficient de déclassement $\beta_i$ à appliquer par au moins une des bornes de recharge DC $8_i$.

En d'autres termes, la puissance octroyée aux bornes de recharge AC et/ou aux bornes de recharge DC est diminuée.

Le calcul 84 d'au moins un coefficient de déclassement est effectué en fonction d'une stratégie de déclassement choisie.

Plusieurs modes de réalisation de l'étape 84 de calcul d'au moins un coefficient de déclassement sont envisagés.

Selon un mode de réalisation, un coefficient de déclassement de même valeur $\alpha$ est appliqué pour chacune des bornes de recharge AC. En d'autres termes, $\alpha_1=\alpha_2=...=\alpha_N:\alpha$ et la valeur $\alpha$ est par exemple calculée en fonction du seuil de dégradation autorisé, ainsi que de la valeur de dégradation calculée.

Selon un mode de réalisation, le ratio entre le seuil de dégradation et la valeur de dégradation est pris en considération. Par exemple, la valeur commune de coefficient de déclassement est calculée par :

[MATH 6]

$$\alpha = \frac{S\_DH}{V(Sg)}$$

Selon un autre mode de réalisation, le dépassement par rapport à ce seuil de dégradation, en d'autres termes la différence (V(Sg) - S_DH), est pris en considération.

En variante, des coefficients de déclassement $\alpha_j$ différenciés sont calculés, en fonction d'une quantité effective de pollution (ou dégradation du facteur de puissance) induite par la borne de recharge $6_j$ correspondante, selon la métrique de dégradation du facteur de puissance considérée. Par exemple, un principe « pollueur payeur » est appliqué : plus la quantité effective de dégradation du facteur de puissance est induite par la borne de recharge $6_j$, plus la borne de rechargé $6_i$ est pénalisée, donc le coefficient de déclassement $\alpha_j$ correspondant est proche de zéro, ce qui induit un fort déclassement.

Les divers coefficients de déclassement $\alpha_i$ ajustés sont transmis aux bornes de recharge AC et/ou aux bornes de recharge DC en tant que valeurs de consigne à appliquer.

Pour ce qui concerne les bornes de recharge DC, dans un mode de réalisation, l'étape 84 met en œuvre le calcul d'au moins un coefficient de déclassement $\beta_i$ à appliquer par au moins une des bornes de recharge DC $8_i$.

Le calcul 84 d'au moins un coefficient de déclassement est effectué en fonction d'une stratégie de déclassement choisie.

Par exemple, lorsque la puissance réactive consommée par le système de recharge est supérieure à la puissance réactive maximale autorisée Prmax, le coefficient de déclassement est calculé pour récupérer une capacité de générer de la puissance réactive en compensation de celle consommée par le système de recharge.

A titre d'exemple, considérons une borne de recharge DC de puissance nominale 180kW chargeant un véhicule à 170 kW qui forme également le dispositif de compensation du système de recharge.

En supposant que la borne de recharge a un rendement proche de 1, un facteur de puissance proche de 1 et que le coefficient de déclassement est égal à 1 (i.e. pas de déclassement), la puissance apparente nominale en entrée de la borne de recharge DC notée Sn est sensiblement égale à la puissance active nominale de sortie, notée Pn.

En supposant que le système de recharge consomme 200kVAr de puissance réactive, et que la puissance réactive maximale autorisée est de 80kVAr, il est demandé à la borne de recharge DC de générer Qc=120kVAr.

En appliquant la formule générale :

[MATH 7]

$$S^2 = P^2 + Q^2$$

Avec S:puissance apparente, P: puissance active, Q: puissance réactive Il en résulte :

[MATH 8]

$$P = \sqrt{180^2 - 120^2} = 134 kW$$

Le coefficient de déclassement à appliquer est alors :

$$\beta = \frac{134}{170} = 0,79$$

La consigne transmise à la borne de recharge DC est alors (134kW, 120kVAr, 0,79).

La borne de recharge DC diminue la puissance fournie au véhicule et injecte dans le réseau une puissance réactive de 120kVAr.

En outre, en l'absence de dégradation non acceptable du facteur de puissance du système de recharge (i.e réponse non à l'étape de vérification 76), l'étape 76 est optionnellement suivie d'une étape 86 de ré-augmentation de la puissance octroyée aux bornes de recharge DC et/ou aux bornes de recharge AC.

En effet, considérant les bornes de recharge dont les coefficients de déclassement respectifs $\alpha_i$, $\beta_i$ ont été mis à une valeur strictement inférieure à 1 lors d'une étape précédente de déclassement 84, un ajustement à la hausse des coefficients de déclassement est effectué lors de l'étape 86. Dit autrement, lors de l'étape 86, chaque coefficient de déclassement $\alpha_i$, $\beta_i$ peut être actualisé en augmentant sa valeur d'une valeur ou d'un pourcentage prédéterminé, ce qui permet à chaque coefficient de déclassement $\alpha_k$ de tendre vers la valeur de 1 si la dégradation du facteur de puissance devient acceptable (c-à-d inférieure au seuil S_DH prédéfini).

Avantageusement, cela permet de réactualiser les valeurs des coefficients de déclassement pour tenir compte dynamiquement d'éventuels changements de situation.

Par exemple, si au moins certains des coefficients de déclassement sont strictement inférieurs à 1, ils sont augmentés d'un pourcentage d'augmentation donné, par exemple de 1%, tout en vérifiant qu'aucun des coefficients n'est supérieur à 1 après augmentation.

Les divers coefficients de déclassement $\alpha_i$, $\beta_i$ ajustés sont transmis aux bornes de recharges AC et/ou aux bornes de recharge DC en tant que valeurs de consigne à appliquer.

En d'autres termes, pour chaque coefficient de déclassement $\alpha_i$ inférieur strictement à 1, et plus généralement à la valeur supérieure de coefficient de déclassement, on applique :

[MATH 9]

$$\alpha_i = \max\left(1; 1,01 \times \alpha_i\right)$$

Bien entendu, le pourcentage de 1% est donné à titre d'exemple, d'autres valeurs de pourcentage étant applicables.

En variante, d'autres types d'augmentation des valeurs des coefficients de déclassement sont envisageables, par exemple une augmentation d'une valeur fixe prédéterminée.

L'étape 86 est suivie d'un envoi de facteur de déclassement mis à jour à appliquer par chaque borne de recharge concernée.

Avantageusement, dans un mode de réalisation, les étapes du procédé sont itérées, pour une même métrique de calcul d'une dégradation du facteur de puissance, jusqu'à ce que la valeur de dégradation selon cette métrique de dégradation du facteur de puissance soit inférieure au seuil de dégradation correspondant.

Avantageusement, selon un mode de réalisation, le procédé décrit ci-dessus est appliqué pour plusieurs métriques de calcul d'une dégradation du facteur de puissance et seuils de dégradation correspondants, successivement, selon un ordre de priorité choisi. Ainsi, l'éventuelle pollution selon plusieurs métriques de dégradation du facteur de puissance est contrôlée.

Par exemple, le procédé est appliqué d'abord, itérativement, pour une première métrique de calcul d'une dégradation du facteur de puissance, par exemple la puissance réactive du système de recharge. Ensuite, le procédé est appliqué itérativement pour une deuxième métrique de calcul d'une dégradation du facteur de puissance, par exemple la distorsion harmonique totale et ainsi de suite.

Avantageusement, il est possible de considérer successivement, comme métriques de calcul d'une dégradation du facteur de puissance, des distorsions harmoniques partielles sur plusieurs rangs harmoniques distincts.

Selon une variante au mode de réalisation de la figure 4, la disponibilité du ou des dispositifs de compensation est validée (réponse oui à l'étape de vérification de disponibilité 78) lorsque la réserve de puissance ou de courant disponible est suffisante pour compenser partiellement la dégradation du facteur de puissance constatée par le ou les dispositifs de compensation. En d'autres termes, la disponibilité est validée pour une compensation partielle de la dégradation du facteur de puissance. Dans ce mode de réalisation, les étapes 80 de calcul des paramètres de compensation du courant de compensation et 84 de déclassement des bornes de recharge AC et/ou DC sont appliquées, par exemple successivement. Cette variante permet également de rendre la dégradation du facteur de puissance inférieure au seuil de dégradation par combinaison des stratégies de compensation et de déclassement.

Avantageusement, lorsque les bornes de recharge DC sont utilisées comme dispositifs de compensation, le système de recharge s'adapte pour réduire la dégradation du facteur de puissance sans nécessité de modification ou d'ajout de nouveaux équipements.

**Revendications**

1. Procédé de recharge électrique pour véhicules électriques, mis en œuvre par un système de recharge (2) de véhicules électriques comportant un module de supervision (20) et une pluralité de bornes de recharge (6, 8) comprenant au moins une borne de recharge $(6_1,...,6_N)$ à énergie électrique alternative, chaque borne de recharge étant alimentée par un réseau de distribution (10) d'un courant électrique alternatif, chaque borne de recharge étant configurée pour communiquer avec le module de supervision via une liaison de communication, le système de recharge (2) comportant au moins un dispositif de compensation (12) adapté pour injecter un courant de compensation dans le réseau de distribution (10), le procédé comportant :

   A) une acquisition (60), par un capteur de courant de chaque borne de recharge à courant alternatif, de mesures d'un courant consommé par un véhicule électrique connecté à ladite borne de recharge, à des instants temporels successifs, et formation d'un signal numérisé de courant consommé sur ladite borne de recharge, puis émission d'au moins un message comprenant des données relatives audit signal numérisé de courant consommé vers le module de supervision (20),
   le procédé étant **caractérisé en ce qu'**il comporte les étapes suivantes, mises en œuvre par le module de supervision (20):

   - B) réception (70) des messages envoyés par chaque borne de recharge, et obtention, à partir de chaque borne de recharge, une représentation spectrale du courant consommé, calculée par application d'une transformation spectrale sur le signal numérisé de courant consommé sur ladite borne de recharge, ladite représentation spectrale comportant une pluralité de couples de valeurs d'amplitude et de phase, chaque couple étant associé à un rang spectral,
   - C) détermination (72) d'une représentation spectrale globale du système de recharge à partir des représentations spectrales du courant consommé par borne de recharge et par rang spectral,
   - D) calcul (75) d'au moins un paramètre d'au moins un courant de compensation, en fonction de la représentation spectrale globale du système de recharge et d'au moins un seuil de dégradation de facteur de puissance prédéterminé, et

   par ledit au moins un dispositif de compensation (12)

   - E) génération (82) d'au moins un courant de compensation utilisant ledit au moins un paramètre calculé et injection, dans le réseau de distribution d'électricité (10), dudit au moins un courant de compensation généré.

2. Procédé selon la revendication 1, mis en œuvre dans un système de recharge de véhicules électriques comportant au moins une borne de recharge $(8_1,..8_M)$ à courant continu, et dans lequel ladite au moins une borne de recharge $(8_1,..8_M)$ à courant continu est un dispositif de compensation (12).

3. Procédé selon la revendication 2, dans lequel chaque borne de recharge à courant continu est alimentée par un courant d'entrée alternatif fourni par ledit réseau de distribution et comporte un convertisseur (24) d'énergie électrique alternative en énergie électrique continue, le procédé comportant, pour chaque borne de recharge à courant continu, une acquisition par un capteur de courant de la borne de recharge à courant continu, en entrée dudit convertisseur, de mesures dudit courant consommé par ladite borne de recharge à courant continu à des instants temporels successifs, et un calcul d'une représentation spectrale du courant consommé par ladite borne de recharge à courant continu.

4. Procédé selon la revendication 3, dans lequel la détermination (72) d'une représentation spectrale globale du système de recharge est effectuée en outre à partir de l'au moins une représentation spectrale du courant consommé par l'au moins une borne de recharge à courant continu.

**5.** Procédé selon l'une quelconque des revendications 1 à 4, dans lequel l'étape de calcul (75) d'au moins un paramètre d'au moins un courant de compensation comporte un calcul (74) d'une valeur de dégradation représentative d'une dégradation du facteur de puissance du système de recharge, selon une métrique de calcul de dégradation du facteur de puissance, en fonction de ladite représentation spectrale globale du système de recharge.

**6.** Procédé selon la revendication 5, dans lequel l'étape de calcul (75) d'au moins un paramètre d'au moins un courant de compensation comporte en outre :

- une comparaison (76) de ladite valeur de dégradation à un seuil de dégradation, et en cas de dépassement du seuil de dégradation, une vérification de disponibilité (78) dudit au moins un dispositif de compensation, et
- en cas de disponibilité dudit au moins un dispositif de compensation, calcul (80) d'au moins un paramètre d'au moins un courant de compensation en fonction du seuil de dégradation.

**7.** Procédé selon la revendication 5 ou 6, dans lequel la valeur de dégradation est représentative de la puissance réactive du système de recharge, le procédé comportant un calcul (80) d'une pluralité de paramètres d'au moins un courant de compensation, lesdits paramètres d'au moins un courant de compensation étant des valeurs d'amplitude et de phase de rang spectral égal à un.

**8.** Procédé selon l'une quelconque des revendications 5 à 7, dans lequel la valeur de dégradation est représentative d'une distorsion harmonique totale ou d'une distorsion harmonique partielle selon un ou plusieurs rangs spectraux prédéterminés, et lesdits paramètres d'au moins un courant de compensation sont, pour chaque courant de compensation, des paramètres d'amplitude et de phase d'une représentation spectrale correspondante.

**9.** Procédé selon l'une quelconque des revendications 5 à 8, comportant une vérification de disponibilité (78) dudit au moins un dispositif de compensation et en cas d'indisponibilité dudit au moins un dispositif de compensation, un calcul (84) d'au moins un coefficient de déclassement à appliquer par au moins une borne de recharge à courant alternatif pour diminuer un paramètre d'énergie électrique fournie par ladite borne de recharge à courant alternatif.

**10.** Procédé selon l'une quelconque des revendications 5 à 9, comportant, lorsque ledit au moins un dispositif de compensation est une borne de recharge à courant continu, en cas d'indisponibilité dudit au moins un dispositif de compensation, un calcul d'une consigne de diminution de puissance délivrée par ladite au moins une borne de recharge à courant continu.

**11.** Système de recharge électrique pour véhicules électriques, comportant un module de supervision (20) et une pluralité de bornes de recharge (6, 8) comprenant au moins une borne de recharge ($6_1$,...,$6_N$) à énergie électrique alternative, chaque borne de recharge étant alimentée par un réseau de distribution (10) d'un courant électrique alternatif, chaque borne de recharge étant configurée pour recharger un véhicule électrique ($4_1$, ...,$4_N$) connecté sur ladite borne de recharge et pour communiquer avec le module de supervision via une liaison de communication, le système de recharge (2) comportant au moins un dispositif de compensation (12) adapté pour injecter un courant de compensation dans le réseau de distribution (10), chaque borne de recharge comportant un capteur de courant configuré pour mesurer, à des instants temporels successifs, un courant consommé par un véhicule électrique connecté à ladite borne de recharge, et former un signal numérisé de courant consommé sur ladite borne de recharge, puis émettre au moins un message comprenant des données relatives audit signal numérisé de courant consommé vers le module de supervision (20), le système de recharge (2) étant **caractérisé en ce que** le module de supervision est configuré (20) pour exécuter des modules de :

- réception des messages envoyés par chaque borne de recharge, et obtention, à partir de chaque borne de recharge, d'une représentation spectrale du courant consommé, calculée par application d'une transformation spectrale sur le signal numérisé de courant consommé sur ladite borne de recharge, ladite représentation spectrale comportant une pluralité de couples de valeurs d'amplitude et de phase, chaque couple étant associé à un rang spectral,
- détermination (40) d'une représentation spectrale globale du système de recharge à partir des représentations spectrales du courant consommé par borne de recharge et par rang spectral,
- calcul (42) d'au moins un paramètre d'au moins un courant de compensation, en fonction de la représentation spectrale globale du système de recharge et d'au moins un seuil de dégradation de facteur de puissance prédéterminé,

ledit au moins un dispositif de compensation (12) étant configuré pour générer au moins un courant de compensation utilisant ledit au moins un paramètre calculé et injecter, dans le réseau de distribution d'électricité (10), ledit au moins un courant de compensation généré.

12. Système de recharge selon la revendication 11 comportant au moins une borne de recharge ($8_1$,..$8_M$) à courant continu, et dans lequel ladite au moins une borne de recharge ($8_1$,..$8_M$) à courant continu est un dispositif de compensation (12).

13. Module de supervision (20) d'un système (2) de recharge de véhicules électriques ($4_1$...$4_N$) selon la revendication 11 ou 12, le module de supervision (20) étant configuré pour mettre en œuvre :

   - un module de réception des messages envoyés par chaque borne de recharge, et d'obtention (38), à partir de chaque borne de recharge, d'une représentation spectrale du courant consommé, calculée par application d'une transformation spectrale sur un signal numérisé de courant consommé sur ladite borne de recharge, ladite représentation spectrale comportant une pluralité de couples de valeurs d'amplitude et de phase, chaque couple étant associé à un rang spectral,
   - un module de détermination (40) d'une représentation spectrale globale du système de recharge à partir des représentations spectrales du courant consommé par borne de recharge et par rang spectral,
   - un module de calcul (42) d'au moins un paramètre d'au moins un courant de compensation, en fonction de la représentation spectrale globale du système de recharge et d'au moins un seuil de dégradation de facteur de puissance prédéterminé.

14. Module de supervision selon la revendication 13, configuré en outre pour transmettre ledit au moins un d'au moins un courant de compensation à un dispositif de compensation (12).

15. Borne de recharge à courant continu d'un système de recharge de véhicules électriques selon la revendication 11 ou 12, la borne de recharge (6) étant configurée pour recharger un véhicule électrique (4) connecté sur ladite borne de recharge et pour communiquer avec le module de supervision (20) via une liaison de communication, la borne de recharge (6) étant configurée pour recevoir dudit module de supervision (20) au moins un paramètre d'au moins un courant de compensation, générer au moins un courant de compensation utilisant ledit au moins un paramètre et injecter ledit au moins un courant de compensation généré dans le réseau de distribution.

FIG.1

FIG.2

FIG.3

EP 4 733 126 A1

| Acquisition | 60 |
| FFT | 62 |
| Tx | 64 |

| Acquisition | 61 |
| FFT | 63 |
| Tx | 65 |

Obtenir représentations spectrales par borne — 70

Déterminer représentation spectrale globale Sg — 72

Calcul valeur représentative dégradation — 74

86

76 Dégradation ? — Non — Réaugmentation puissance bornes AC et/ou DC

75

Oui

78 Disponibilté ? — Non — Déclassement bornes AC et/ou DC

84

Oui

Calcul paramètres du courant de compensation — 80

Injection de compensation — 82

FIG.4

20

| | Europäisches Patentamt European Patent Office Office européen des brevets | **RAPPORT DE RECHERCHE EUROPEENNE** | *Numéro de la demande* EP 25 20 9837 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2014/021917 A1 (PAUPERT MARC [FR]) 23 janvier 2014 (2014-01-23) * alinéa [0025] - alinéa [0037]; figure 1 * ----- | 1-15 | INV. B60L53/10 B60L53/62 H02J3/18 H02J3/26 |
| A | US 2016/272079 A1 (QUOC-TUAN TRAN [FR] ET AL) 22 septembre 2016 (2016-09-22) * alinéa [0036] - alinéa [0040]; figure 1 * ----- | 1-15 | H02J7/02 B60L53/14 |

**DOMAINES TECHNIQUES RECHERCHES (IPC)**

B60L
H02J

Le présent rapport a été établi pour toutes les revendications

| Lieu de la recherche | Date d'achèvement de la recherche | Examinateur |
|---|---|---|
| La Haye | 16 mars 2026 | Benedetti, Gabriele |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 20 9837

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-03-2026

| Document brevet cité au rapport de recherche | Date de publication | Membre(s) de la famille de brevet(s) | | Date de publication |
|---|---|---|---|---|
| US 2014021917 A1 | 23-01-2014 | CN | 103580258 A | 12-02-2014 |
| | | EP | 2688177 A1 | 22-01-2014 |
| | | FR | 2993514 A1 | 24-01-2014 |
| | | US | 2014021917 A1 | 23-01-2014 |
| US 2016272079 A1 | 22-09-2016 | EP | 3071441 A1 | 28-09-2016 |
| | | FR | 3013514 A1 | 22-05-2015 |
| | | JP | 2017500836 A | 05-01-2017 |
| | | US | 2016272079 A1 | 22-09-2016 |
| | | WO | 2015075341 A1 | 28-05-2015 |

EPO FORM P0460

Pour tout renseignement concernant cette annexe : voir Journal Officiel de l'Office européen des brevets, No.12/82